# FASCICULE DE BREVET EUROPEEN

(11) **EP 3 313 730 B1**
(45) Date de publication et mention de la délivrance du brevet: **13.03.2019**
(21) Numéro de dépôt: 16736531.1
(22) Date de dépôt: 17.06.2016
(51) Int. Cl.: B64C 11/38

(54) **DISPOSITIF DE RÉGULATION D'UNE HÉLICE À PALES À CALAGE VARIABLE D'UN TURBOPROPULSEUR**
REGELEINRICHTUNG FÜR EINEN TURBOPROP-PROPELLER MIT VARIABLER BLATTVERSTELLUNG
REGULATING DEVICE FOR A TURBOPROP PROPELLER WITH VARIABLE PITCH BLADES

(30) Priorité: 23.06.2015 FR 1555734
(43) Date de publication de la demande: 02.05.2018
(73) Titulaire: Safran Helicopter Engines, 64510 Bordes (FR)
(72) Inventeur: MOUTAUX, Antoine, 77550 Moissy-cramayel (FR); PRESSE, Jean-Michel, 77550 Moissy-cramayel (FR)
(74) Mandataire: Gevers & Orès
(86) Numéro de dépôt international: PCT/FR2016/051476
(87) Numéro de publication internationale: WO 2016/207522

(56) Documents cités:
- GB-A- 2 144 491
- US-A1- 2013 323 050

## Description

### 1. Domaine technique de l'invention

L'invention concerne un dispositif de régulation d'une hélice d'un turbopropulseur. L'invention concerne en particulier un dispositif de régulation d'une hélice à pales à calage variable, c'est-à-dire une hélice dont les pales peuvent être pivotées autour de leur axe. Les documents GB2144491 et US2013/0323050 décrivent des dispositifs conventionnels de régulation des hélices à pales à calage variable.

### 2. Arrière-plan technologique

Un turbopropulseur est un moyen de propulsion, utilisé notamment sur certains aéronefs, et comprenant une turbine à gaz et une hélice. Les hélices de la plupart des turbopropulseurs d'aujourd'hui sont des hélices comprenant des pales à calage variable. On parle également d'hélices à pas variable. Une hélice à pales à calage (ou pas) variable est équipée d'un mécanisme permettant d'ajuster l'angle de calage des pales, c'est-à-dire l'angle entre la corde de référence d'une pale et son plan de rotation. Le réglage de l'angle de calage des pales permet d'ajuster les caractéristiques de l'hélice de manière à optimiser les performances du turbopropulseur dans un large domaine de vol. Par exemple, pour les phases de décollage et de montée de l'aéronef, on vise en général un pas important pour maintenir une vitesse d'hélice raisonnable sous de fortes puissances. Pour les phases de vol de croisière, on vise en général un pas plus faible, afin de maintenir une vitesse d'hélice raisonnable avec des puissances moteur plus faibles Durant l'atterrissage, on vise en général un pas négatif pour ralentir l'aéronef et réduire sa distance de freinage. Il est donc nécessaire de disposer d'un dispositif de régulation permettant de modifier au cours du vol le pas des pales d'une hélice.

En règle générale, les hélices à pales à calage variable sont commandées suivant deux modes de fonctionnement dépendant des phases de vol de l'aéronef. Pour les faibles régimes moteurs, on régule directement le pas de l'hélice. Ce mode est désigné dans tout le texte comme le « mode beta ». Pour les régimes moteurs plus importants, on régule la vitesse de l'hélice sur un point de fonctionnement optimal. Ce mode est désigné dans tout le texte comme le « mode vitesse ».

Il est donc nécessaire de disposer à la fois d'un système de régulation pour le mode beta qui asservit le pas à une consigne de pas, et d'un système de régulation pour le mode vitesse qui asservit la vitesse de l'hélice à une consigne de vitesse. Ces consignes de pas et de vitesse sont soit fixes, soit fournies par l'extérieur au moyen de câbles mécaniques ou de signaux électriques.

Actuellement, il existe trois grandes familles de système de régulation d'une hélice : la régulation électrique, la régulation électro-hydraulique par servovanne et la régulation hydromécanique.

Les régulations électrique et par servovanne ne sont, en pratique, pas utilisables pour toutes les applications, soit à cause du poids total du système (c'est notamment le cas de la régulation par servovanne), des coûts générés (c'est notamment le cas de la régulation électrique ou de la régulation par servovanne) ou du niveau insuffisant de maturité (c'est notamment le cas de la régulation électrique).

Le principe de la régulation hydromécanique est d'appliquer une pression d'huile sur un piston solidaire d'un mécanisme entrainant les pales en rotation autour de leur axe. Le piston est par exemple logé dans un cylindre dans le moyeu de l'hélice, et définit une ou deux chambres de pression. On parle d'hélice à double action lorsque la pression peut être exercée de chaque côté du piston. On parle d'hélice simple action lorsque la pression ne peut être exercée que d'un côté du piston. Dans ce cas, le rappel du piston est effectué à l'aide d'un ressort et de masselottes agencées sur le pied de chaque pale.

Un dispositif de régulation d'une hélice à pales à calage variable comprend de manière connue un premier équipement hydromécanique d'asservissement du pas des pales de l'hélice à une consigne de pas, et un deuxième équipement hydromécanique d'asservissement de la vitesse de rotation de l'hélice à une consigne de vitesse.

Le premier équipement hydromécanique d'asservissement du pas met en général en oeuvre un tiroir actionné par l'hélice d'une part (ce qui permet d'obtenir une copie de l'angle des pales) et une tringlerie mécanique actionnée par le pilote pour fournir la consigne de pas.

Le deuxième équipement hydromécanique d'asservissement de la vitesse met en oeuvre un régulateur de vitesse à base de masselottes tournantes.

Ainsi, en mode vitesse, le système rotatif à masselottes, entrainé en rotation par le réducteur du moteur à une vitesse proportionnelle à celle de l'hélice, entraine un tiroir qui pilote directement ou via un amplificateur hydraulique, le piston de l'hélice et donc son pas. Le tarage du ressort de rappel des masselottes définit la vitesse de consigne. Cette consigne de vitesse peut être modifiée, par exemple en jouant sur le tarage du ressort via un câble mécanique ou un électroclapet tout-ou-rien. En mode béta, les tiroirs hydrauliques liés mécaniquement à la consigne de pas et la recopie de pas permettent d'asservir le pas à la consigne visée. La consigne de pas est transmise mécaniquement au tiroir par la tringlerie mécanique pilotée depuis le cockpit.

Cette solution présente deux inconvénients. D'une part, le pilotage de la consigne de vitesse par action sur le ressort de rappel est soit binaire (2 vitesses sélectionnables), soit réalisé par une tringlerie mécanique ne permettant pas le pilotage par un dispositif électronique tel un calculateur de régulation moteur. D'autre part, le pilotage de la consigne de pas est réalisé par une tringle mécanique liée aux commandes en cockpit, et ne permet donc pas le pilotage direct du pas via un calculateur de régulation électronique.

Les inventeurs ont donc cherché à améliorer le principe de régulation hydromécanique d'une hélice à pales à calage variable.

### 3. Objectifs de l'invention

L'invention vise à pallier au moins certains des inconvénients des dispositifs de régulation d'une hélice à pales à calage variable connus.

En particulier, l'invention vise aussi à fournir, dans au moins un mode de réalisation de l'invention, un dispositif de régulation d'une hélice à pales à calage variable qui ne nécessite plus de tringles mécaniques reliées au cockpit pour piloter l'hélice en mode béta.

L'invention vise aussi à fournir, dans au moins un mode de réalisation de l'invention, un dispositif qui permet un interfaçage électrique avec un calculateur de régulation électronique.

L'invention vise aussi à fournir, dans au moins un mode de réalisation de l'invention, un dispositif qui présente une masse et un coût inférieurs aux dispositifs de régulation de l'art antérieur.

### 4. Exposé de l'invention

Pour ce faire, l'invention concerne un dispositif de régulation d'une hélice à pales à calage variable d'un moteur d'aéronef - par exemple un turbopropulseur ou open rotor - comprenant un premier équipement hydromécanique d'asservissement du pas des pales de l'hélice à une consigne de pas, et un deuxième équipement hydromécanique d'asservissement de la vitesse de rotation de l'hélice à une consigne de vitesse.

Le dispositif de régulation d'une hélice selon l'invention est caractérisé en ce qu'il comprend en outre un actionneur électromécanique unique comprenant un organe d'actionnement mobile relié mécaniquement à la fois audit premier équipement hydromécanique d'asservissement du pas, afin de piloter la consigne de pas, et audit deuxième équipement hydromécanique d'asservissement de la vitesse afin de piloter la consigne de vitesse.

Un dispositif de régulation selon l'invention comprend donc un actionneur électromécanique unique qui permet de piloter à la fois la consigne en vitesse et la consigne en pas. Ce pilotage se fait par le biais d'un organe d'actionnement mobile qui est relié mécaniquement à la fois au premier équipement hydromécanique et au deuxième équipement hydromécanique. L'utilisation d'un actionneur unique est possible car les inventeurs ont réalisé que les modes vitesse et béta ne sont pas utilisés dans les mêmes phases du vol. Il est donc possible avec un seul actionneur électromécanique de piloter soit la consigne de vitesse dans les phases de vol correspondantes, soit la consigne de pas dans les phases de vol correspondantes. Un actionneur électromécanique est en outre configuré pour recevoir des commandes électriques et actionner un organe d'actionnement mobile en conséquence. Ainsi, un dispositif de régulation selon l'invention permet d'utiliser une commande électrique unique pour piloter la consigne de pas et la consigne de vitesse. En d'autres termes, un dispositif selon l'invention supprime la nécessité de disposer de câbles mécaniques dans le cockpit car le mode béta et le mode vitesse sont directement pilotés par une commande électrique fournie à l'actionneur électromécanique. Il est en outre possible avec l'invention de ne disposer que d'une seule interface pour le pilotage des deux modes de fonctionnement de l'hélice.

Avantageusement et selon l'invention, l'organe d'actionnement mobile dudit actionneur électromécanique est configuré pour pouvoir se déplacer dans au moins une première plage de positions dans laquelle il actionne ledit premier équipement hydromécanique pour pouvoir déterminer une consigne de pas, et dans au moins une deuxième plage de positions dans laquelle il actionne ledit deuxième équipement hydromécanique pour pouvoir déterminer une consigne de vitesse.

Selon une première variante de l'invention, ces deux plages de position sont distinctes l'une de l'autre de sorte que dans la première plage de positions, l'organe d'actionnement mobile détermine la consigne de pas et maintient constante la consigne de vitesse ; dans la deuxième plage de positions, l'organe d'actionnement mobile détermine la consigne de vitesse et maintient constante la consigne de pas.

En d'autres termes, selon cette variante, l'organe d'actionnement mobile est configuré pour pouvoir maintenir une consigne de vitesse constante sur ledit deuxième équipement lorsqu'il est dans ladite première plage de positions, et pour pouvoir maintenir une consigne de pas constante sur ledit premier équipement lorsqu'il est dans ladite deuxième plage de positions.

Selon une autre variante, les deux plages de positions sont imbriquées de sorte que l'organe d'actionnement mobile agit, quelle que soit sa position, à la fois sur la consigne de vitesse et sur la consigne de pas.

Avantageusement et selon l'invention, l'organe d'actionnement mobile est configuré pour pouvoir se déplacer dans au moins une troisième plage de positions, dite plage neutre, dans laquelle il n'exerce aucune action notable sur aucun des deux équipements hydromécaniques.

Selon cette variante, l'organe d'actionnement mobile peut être déplacé dans une plage neutre dans laquelle il n'a pas d'impact notable sur les consignes de vitesse et de pas.

Avantageusement et selon l'invention, le deuxième équipement hydromécanique comprend un tiroir hydraulique configuré pour pouvoir piloter hydrauliquement le pas d'hélice, relié à des masselottes configurées pour pouvoir être entrainées mécaniquement à une vitesse proportionnelle à celle de l'hélice, et un ressort de rappel desdites masselottes, et l'organe d'actionnement mobile de l'actionneur électromécanique est configuré pour pouvoir agir sur une contrainte du ressort de rappel des masselottes. Cette action sur la contrainte du ressort de rappel des masselottes permet de moduler la consigne de vitesse.

Avantageusement et selon l'invention, le premier équipement hydromécanique comprend au moins un tiroir hydraulique configuré pour pouvoir piloter hydrauliquement le pas d'hélice et entrainé mécaniquement par une tringlerie reliée à une recopie du pas de l'hélice, et ledit organe d'actionnement mobile dudit actionneur électromécanique est configuré pour pouvoir agir sur ledit tiroir hydraulique afin de moduler la consigne de pas de l'hélice.

Avantageusement et selon l'invention, l'organe d'actionnement mobile relié mécaniquement auxdits premier et deuxième équipements hydromécaniques comprend au moins une came présentant un profil qui détermine une loi d'actionnement des premier et deuxième équipements hydromécaniques en fonction d'une position angulaire de chaque came.

Avantageusement et selon l'invention, ledit actionneur électromécanique est choisi dans le groupe comprenant un moteur pas-à-pas, un moteur à courant continu ou un moteur couple, simple voie ou redondé.

L'invention concerne également un moteur d'aéronef de type turbopropulseur, ou open rotor, ou plus généralement équipé de pales à calage variable, équipé d'un dispositif de régulation selon l'invention.

L'invention concerne également un dispositif de régulation et un moteur d'aéronef équipé d'un tel dispositif de régulation, caractérisés en combinaison par tout ou partie des caractéristiques mentionnées ci-dessus ou ci-après.

### 5. Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique du principe de fonctionnement d'un dispositif de régulation selon l'invention,
- la figure 2 est une vue schématique d'un dispositif de régulation selon un mode de réalisation de l'invention mettant en oeuvre un actionneur électromécanique linéaire,
- la figure 3 est une vue schématique des courbes de variation des consignes en fonction de la position de l'organe d'actionnement mobile d'un dispositif de régulation selon un mode de réalisation de l'invention,
- les figures 4a, 4b, 4c sont des vues schématiques d'un dispositif de régulation selon un autre mode de réalisation de l'invention mettant en oeuvre un actionneur électromécanique rotatif, selon différents modes de fonctionnement,
- la figure 5 est une vue schématique d'un dispositif de régulation selon un autre mode de réalisation mettant en oeuvre un actionneur électromécanique rotatif comprenant deux cames distinctes.

### 6. Description détaillée d'un mode de réalisation de l'invention

Sur les figures, les échelles et les proportions ne sont pas strictement respectées et ce, à des fins d'illustration et de clarté. Dans toute la description détaillée qui suit en référence aux figures, les éléments identiques, similaires ou analogues sont désignés par les mêmes références.

Selon l'invention, un dispositif de régulation d'une hélice à pales à calage variable d'un turbopropulseur comprend un premier équipement hydromécanique d'asservissement du pas des pales de l'hélice, désigné ci-après par les termes de premier équipement et référencé 10 sur les figures. Le dispositif de régulation comprend également un deuxième équipement hydromécanique d'asservissement de la vitesse de rotation de l'hélice, désigné ci-après par les termes de deuxième équipement et référencé 20 sur les figures.

Les premier et deuxième équipements ne sont pas décrits en détail car l'invention réside essentiellement dans les moyens de commande de ces équipements et non pas dans les équipements en tant que tel qui sont, par ailleurs, connus de l'homme du métier. D'ailleurs, ces premier et deuxième équipements peuvent mettre en oeuvre des moyens communs, tels que des tiroirs, pistons, masselottes, etc., même s'ils sont représentés comme deux équipements séparés sur les figures à des fins d'illustration et de clarté.

Le premier équipement 10 et le second équipement 20 sont configurés pour pouvoir agir hydromécaniquement sur le pas des hélices, et agir indirectement sur la vitesse de l'hélice.

Un dispositif selon l'invention comprend en outre un actionneur 30 électromécanique comprenant un organe 31 d'actionnement mobile relié mécaniquement à la fois au premier équipement 10 et au deuxième équipement 20.

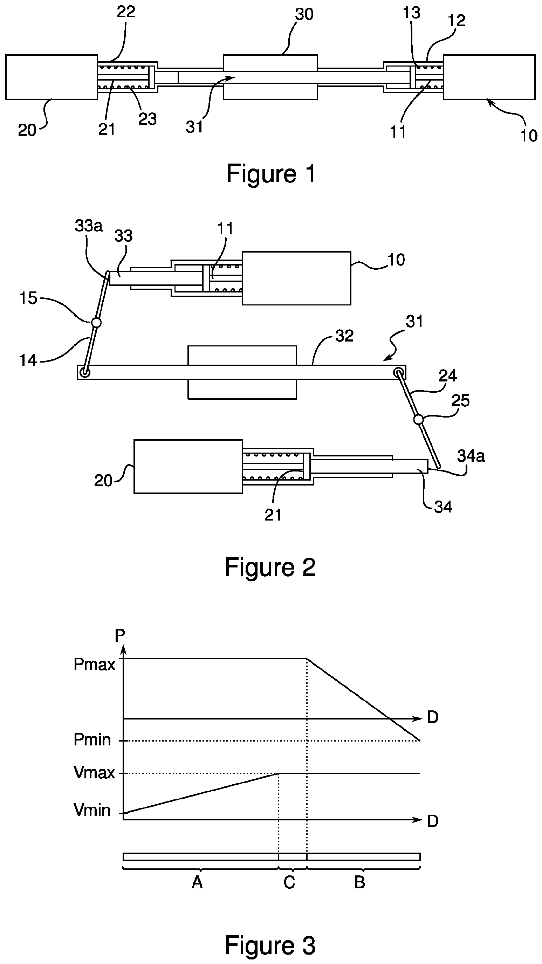

Selon le mode de réalisation représenté sur les figures 1 et 2, l'actionneur 30 est un actionneur linéaire.

Selon le mode de réalisation de la figure 1, l'organe 31 d'actionnement mobile est une tige mobile. Cette tige mobile peut être déplacée pour actionner soit le premier équipement 10, par exemple par l'intermédiaire d'un piston 11 logé dans un cylindre 12 et contraint par un ressort 13, soit le deuxième équipement 20, par exemple par l'intermédiaire d'un piston 21 logé dans un cylindre 22 et contraint par un ressort 23. Selon un mode de réalisation particulier, le piston 11 et 21, le cylindre 12 et 22 et le ressort 13 et 23 peuvent être logés dans les équipements 10 et 20.

Selon un autre mode de réalisation tel que représenté sur la figure 2, l'organe 31 d'actionnement mobile est formé d'une première tige 32 directement actionnée par une commande électrique reçue par l'actionneur et de deux tiges 33, 34 reliées respectivement aux pistons 11, 21 par l'intermédiaire de biellettes 14, 24 montées chacune pivotante autour de pivots respectifs 15, 25. Ainsi, le déplacement de la tige 32 mobile entraine, selon le sens de déplacement de cette tige, soit le réglage de la consigne de pas, soit le réglage de la consigne de vitesse par l'intermédiaire des biellettes 14, 24, des tiges 33, 34 et des pivots 15, 25. Par exemple, si la tige 32 est déplacée vers la gauche sur la figure 2, la biellette 14 pivote autour du pivot 15 de sorte que son extrémité supérieure entre en contact mécanique avec l'extrémité 33a de la tige 33 et entraine donc le piston 11, solidaire de la tige 33, en déplacement, ce qui permet un réglage de la consigne de pas. En revanche, si la tige 32 est déplacée vers la droite sur la figure 2, la biellette 24 pivote autour du pivot 25 de sorte que son extrémité inférieure entre en contact mécanique avec l'extrémité 34a de la tige 34 et entraine donc le piston 21, solidaire de la tige 34, en déplacement, ce qui permet un réglage de la consigne de vitesse.

Les configurations des figures 1 et 2 permettent de former une première plage A de positions dans laquelle l'organe 31 d'actionnement mobile actionne le premier équipement 10 hydromécanique pour pouvoir déterminer une consigne de pas et une deuxième plage B de positions dans laquelle l'organe 31 d'actionnement mobile actionne le deuxième équipement 20 hydromécanique.

Sur la figure 1, l'organe 31 d'actionnement est dans une position de la plage A de positions. En effet, on constate que l'organe 31 d'actionnement est en contact avec le piston 11 et agit directement sur le piston de telle sorte qu'il agit sur la commande du pas de l'hélice. Si l'organe 31 d'actionnement est actionné vers le piston 21, alors l'organe sera dans une position de la deuxième plage B de positions dans laquelle il actionne ledit deuxième équipement 20 hydromécanique pour pouvoir déterminer une consigne de vitesses.

On constate également que la configuration de la figure 1 permet de former une plage C de positions dans laquelle l'organe 31 d'actionnement n'agit sur aucun des deux pistons 11 ou 21 de telle sorte que dans cette zone neutre, ni le pas, ni la vitesse n'est commandée.

La figure 3 est une vue schématique sur laquelle les différentes plages A, B et C ainsi définies ont été représentées en relation avec la course D de l'organe d'actionnement mobile 31 et les consignes en vitesse V et en pas P associées. Les consignes en vitesse V et en pas P évoluent respectivement entre des valeurs extrêmes Vmax et Vmin, et Pmax et Pmin, selon la course D de l'organe d'actionnement mobile.

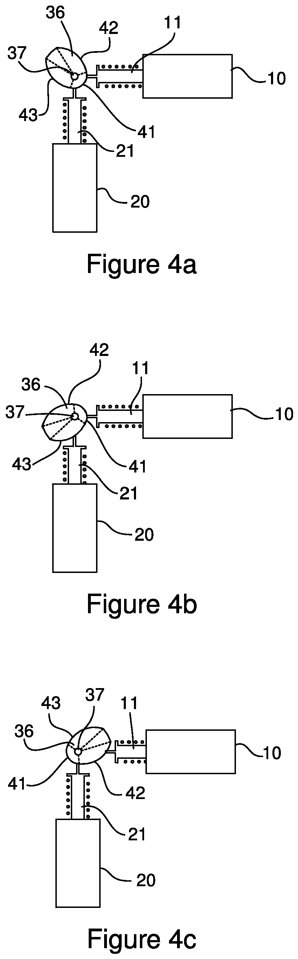

Selon un autre mode de réalisation tel que représenté sur les figures 4a, 4b et 4c, l'organe d'actionnement mobile comprend une came 36 présentant un profil qui détermine une loi d'actionnement des premier et deuxième équipements hydromécaniques en fonction d'une position angulaire de la came 36. Cette came 36 est montée pivotante autour d'un axe 37. La came 36 présente en outre un profil divisée en trois secteurs principaux dont un secteur 41 en arc de cercle, dit secteur constant, un secteur 43 non circulaire, dit secteur de vitesses, et un secteur 42 non circulaire, dit secteur de pas. Les secteurs 42, 43 forment des secteurs de commande. En outre, les deux pistons 11, 21 des premier et deuxième équipements sont agencés de manière à être en contact avec la came 36. En fonction de la position angulaire de la came, chaque piston peut être mis en mouvement par l'un ou l'autre des secteurs du profil de la came.

Lorsque la came est pivotée autour de l'axe 37 pour amener le secteur 41 en arc de cercle en butée contre un piston du premier ou du deuxième équipement, cet équipement est maintenu dans une position constante. En effet, tant que la came maintien le secteur 41 en contact du piston, la distance qui sépare l'axe 37 de l'extrémité du profil en regard du piston, reste constante. La compression du piston en regard de la came reste donc constante. En d'autres termes, tant que le piston reste en contact de ce secteur en arc de cercle, sa position ne change pas. Il s'agit donc bien d'un secteur constant pour la commande. Ce secteur peut avoir une plage angulaire supérieure à l'angle formé par les deux pistons (ici 90°) de manière à générer une plage angulaire dans laquelle le déplacement de l'actionneur n'a d'effet ni sur la consigne de position, ni sur la consigne de pas. Il s'agit de la zone neutre précédemment citée.

En revanche, lorsque la came est pivotée autour de l'axe 37 pour amener un secteur 42, 43 de commande en regard et au contact d'un piston, toute rotation de la came entraine un déplacement en translation de ce piston en regard. En effet, la distance qui sépare l'axe 37 de l'extrémité du profil en regard d'un piston change étant donné que le profil n'est plus circulaire.

Sur la figure 4a, la came 36 est orientée de telle sorte que chaque piston est en contact avec le secteur 41. Il s'agit de la zone neutre de l'actionneur, qui n'agit ni sur la vitesse ni sur le pas de l'hélice.

Sur la figure 4b, la came 36 est orientée de telle sorte que le secteur 43 de vitesses est en contact du piston 21 du deuxième équipement 20. Ainsi, sur toute cette plage de positions, la came 36 détermine une consigne de vitesse. Lorsque le secteur 43 est en regard du piston 21 de l'équipement 20, le secteur 41 constant est en regard du piston 11 de l'équipement 10 de telle sorte que la consigne de pas n'est pas affectée par la rotation de la came sur tout ce secteur.

Sur la figure 4c, la came 36 est orientée de telle sorte que le secteur 42 de vitesses est en contact du piston 11 du premier équipement 10. Ainsi, sur toute cette plage de positions, la came 36 détermine une consigne de pas. Lorsque le secteur 42 est en regard du piston 11 de l'équipement 10, le secteur 41 constant est en regard du piston 21 de l'équipement 20 de telle sorte que la consigne de vitesse n'est pas affectée par la rotation de la came sur tout ce secteur.

Selon une variante avantageuse de ce mode de réalisation, l'actionneur électromécanique entraine deux cames distinctes, chaque came étant configurée pour agir sur une consigne uniquement.

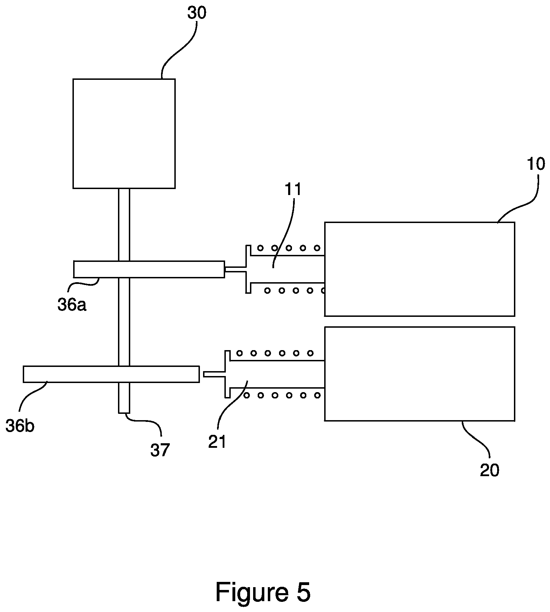

Par exemple, et tel que représenté sur la figure 5, l'actionneur comprend une première came 36a configurée pour pouvoir agir sur une consigne de pas, et une deuxième came 36b configurée pour pouvoir agir sur une consigne de vitesses. Sur la figure 5, les cames sont représentées de côté à des fins d'illustration et de clarté. Chaque came comprend un profil spécifique qui déterminer la loi de commande de la consigne qu'elle peut piloter.

L'invention ne se limite pas aux seuls modes de réalisation décrits. En particulier, selon le mode de réalisation des figures 4a, 4b et 4c, les secteurs 42 et 43 présentent des profils identiques. Cela étant, selon d'autres modes de réalisation, chaque secteur de vitesse et de pas peut présenter un profil propre pour déterminer une loi de commande spécifique. Ainsi, il est possible d'adapter les lois de commande, en fonction des besoins spécifiques liées au type d'hélice à laquelle le dispositif de régulation est destiné.

## Revendications

1. Dispositif de régulation d'une hélice à pales à calage variable d'un moteur d'aéronef comprenant un premier équipement (10) hydromécanique d'asservissement du pas des pales de l'hélice à une consigne de pas et un deuxième équipement (20) hydromécanique d'asservissement de la vitesse de rotation de l'hélice à une consigne de vitesse,
**caractérisé en ce qu'**il comprend un actionneur (30) électromécanique unique comprenant un organe d'actionnement (31, 36) mobile relié mécaniquement à la fois audit premier équipement (10) hydromécanique d'asservissement du pas, afin de piloter la consigne de pas, et audit deuxième équipement (20) hydromécanique d'asservissement de la vitesse, afin de piloter la consigne de vitesse.

2. Dispositif selon la revendication 1 **caractérisé en ce que** ledit organe d'actionnement (31, 36) mobile dudit actionneur électromécanique est configuré pour pouvoir se déplacer dans au moins une première plage de positions dans laquelle il actionne ledit premier équipement (10) hydromécanique pour pouvoir déterminer une consigne de pas, et dans au moins une deuxième plage de positions dans laquelle il actionne ledit deuxième équipement (20) hydromécanique pour pouvoir déterminer une consigne de vitesses.

3. Dispositif selon la revendication 2, **caractérisé en ce que** ledit organe d'actionnement (31, 36) mobile est configuré pour pouvoir maintenir une consigne de vitesse constante sur ledit deuxième équipement (20) lorsqu'il est dans ladite première plage de positions, et pour pouvoir maintenir une consigne de pas constante sur ledit premier équipement (10) lorsqu'il est dans ladite deuxième plage de positions.

4. Dispositif selon l'une des revendications 2 ou 3, **caractérisé en ce que** ledit organe d'actionnement (31, 36) mobile est configuré pour pouvoir se déplacer dans au moins une troisième plage de positions, dite plage neutre, dans laquelle il n'exerce aucune action notable sur aucun des deux équipements hydromécaniques.

5. Dispositif selon l'une des revendications 1 à 4, **caractérisé en ce que** ledit deuxième équipement (20) hydromécanique comprend un tiroir hydraulique configuré pour pouvoir piloter hydrauliquement le pas d'hélice, et relié à des masselottes configurées pour pouvoir être entrainées mécaniquement à une vitesse proportionnelle à celle de l'hélice, et un ressort de rappel desdites masselottes et **en ce que** ledit organe d'actionnement (31, 36) mobile dudit actionneur électromécanique est configuré pour pouvoir agir sur une contrainte dudit ressort de rappel des masselottes.

6. Dispositif selon l'une des revendications 1 à 5, **caractérisé en ce que** ledit premier équipement (10) hydromécanique comprend au moins un tiroir hydraulique pilotant hydrauliquement le pas d'hélice, entrainé mécaniquement par une tringlerie reliée à une recopie du pas de l'hélice, et **en ce que** ledit organe d'actionnement (31, 36) mobile dudit actionneur électromécanique est configuré pour pouvoir agir sur ledit tiroir hydraulique.

7. Dispositif selon l'une des revendications 1 à 6, **caractérisé en ce que** ledit organe d'actionnement mobile relié mécaniquement auxdits premier et deuxième équipements hydromécaniques comprend au moins une came (36) présentant un profil qui détermine une loi d'actionnement des premier et deuxième équipements hydromécaniques en fonction d'une position angulaire de chaque came (36).

8. Dispositif selon l'une des revendications 1 à 7, **caractérisé en ce que** ledit actionneur (30) électromécanique est choisi dans le groupe comprenant un moteur pas-à-pas, un moteur à courant continu ou un moteur couple, simple voie ou redondé.

9. Moteur d'aéronef de type turbopropulseur, ou open rotor, ou plus généralement équipé de pales à calage variable, équipé d'un dispositif selon les revendications 1 à 8.

## Patentansprüche

1. Regelvorrichtung für einen Propeller mit Blättern mit variabler Feststellposition eines Flugzeugtriebwerks, umfassend eine erste hydromechanische Ausrüstung (10) zum Regeln der Anstellung der Propellerblätter auf einen Sollwert der Anstellung und eine zweite hydromechanische Ausrüstung (20) zum Regeln der Drehzahl des Propellers auf einen Sollwert der Drehzahl,
**dadurch gekennzeichnet, dass** sie einen einzigen elektromechanischen Aktuator (30) umfasst, der ein bewegliches Betätigungsorgan (31, 36) umfasst, das sowohl mit der ersten hydromechanischen Ausrüstung (10) zum Regeln der Anstellung, um den Sollwert der Anstellung zu steuern, als auch mit der zweiten hydromechanischen Ausrüstung (20) zum Regeln der Drehzahl, um den Sollwert der Drehzahl zu steuern, mechanisch verbunden ist.

2. Vorrichtung nach Anspruch 1, **dadurch gekennzeichnet, dass** das bewegliche Betätigungsorgan (31, 36) des elektromechanischen Aktuators konfiguriert ist, um in mindestens einem ersten Positionsbereich bewegbar zu sein, in dem es die erste hydromechanische Ausrüstung (10) betätigt, um einen Sollwert der Anstellung bestimmen zu können, und in mindestens einem zweiten Positionsbereich, in dem es die zweite hydromechanische Ausrüstung (20) betätigt, um einen Sollwert der Drehzahlen bestimmen zu können.

3. Vorrichtung nach Anspruch 2, **dadurch gekennzeichnet, dass** das bewegliche Betätigungsorgan (31, 36) konfiguriert ist, um einen konstanten Sollwert der Drehzahl an der zweiten Ausrüstung (20) aufrechterhalten zu können, wenn es sich in dem ersten Positionsbereich befindet, und um einen konstanten Sollwert der Anstellung an der ersten Ausrüstung (10) aufrechterhalten zu können, wenn es sich in dem zweiten Positionsbereich befindet.

4. Vorrichtung nach einem der Ansprüche 2 oder 3, **dadurch gekennzeichnet, dass** das bewegliche Betätigungsorgan (31, 36) konfiguriert ist, um sich in mindestens einen dritten Positionsbereich, den sogenannten Neutralbereich, bewegen zu können, in dem es keine merkliche Wirkung auf eine der beiden hydromechanischen Ausrüstungen ausübt.

5. Vorrichtung nach einem der Ansprüche 1 bis 4, **dadurch gekennzeichnet, dass** die zweite hydromechanische Ausrüstung (20) einen hydraulischen Schieber umfasst, der konfiguriert ist, um die Propelleranstellung hydraulisch steuern zu können, und mit Gewichten verbunden ist, die konfiguriert sind, um mechanisch mit einer Geschwindigkeit angetrieben werden zu können, die proportional zu der des Propellers ist, und eine Rückstellfeder der Gewichte, und dadurch, dass das bewegliche Betätigungsorgan (31, 36) des elektromechanischen Aktuators konfiguriert ist, um auf eine Belastung der Rückstellfeder der Gewichte wirken zu können.

6. Vorrichtung nach einem der Ansprüche 1 bis 5, **dadurch gekennzeichnet, dass** die erste hydromechanische Ausrüstung (10) mindestens einen hydraulischen Schieber umfasst, der die Propelleranstellung hydraulisch steuert und mechanisch durch ein Gestänge angetrieben wird, das mit einer Nachführung der Propelleranstellung verbunden ist, und dadurch, dass das bewegliche Betätigungsorgan (31, 36) des elektromechanischen Aktuators konfiguriert ist, um auf den hydraulischen Schieber wirken zu können.

7. Vorrichtung nach einem der Ansprüche 1 bis 6, **dadurch gekennzeichnet, dass** das bewegliche Betätigungsorgan, das mechanisch mit der ersten und zweiten hydromechanischen Ausrüstung verbunden ist, mindestens einen Nocken (36) mit einem Profil umfasst, das ein Betätigungsgesetz der ersten und zweiten hydromechanischen Ausrüstung in Abhängigkeit von einer Winkelposition jedes Nockens (36) bestimmt.

8. Vorrichtung nach einem der Ansprüche 1 bis 7, **dadurch gekennzeichnet, dass** der elektromechanische Aktuator (30) ausgewählt ist aus der Gruppe umfassend einen Schrittmotor, einen Gleichstrommotor oder einen Drehmomentmotor, einspurig oder redundant.

9. Flugzeugtriebwerk vom Typ Turboprop oder offener Rotor oder allgemeiner ausgestattet mit Blättern mit variabler Feststellposition, ausgestattet mit einer Vorrichtung nach den Ansprüchen 1 bis 8.

## Claims

1. Device for controlling a propeller, having variable-pitch blades, of an aircraft engine, comprising a first piece of hydromechanical equipment (10) for slaving the pitch of the blades of the propeller to a pitch setpoint, and a second piece of hydromechanical equipment (20) for slaving the rotational speed of the propeller to a speed setpoint,
**characterised in that** it comprises a single electromechanical actuator (30) comprising a movable actuating member (31, 36) mechanically connected both to said first piece of hydromechanical equipment (10) for slaving the pitch, in order to control the pitch setpoint, and to said second piece of hydromechanical equipment (20) for slaving the speed, in order to control the speed setpoint.

2. Device according to claim 1, **characterised in that** said movable actuating member (31, 36) of said electromechanical actuator is designed to move within at least one first range of positions in which it actuates said first piece of hydromechanical equipment (10) to determine a pitch setpoint, and within at least one second range of positions in which it actuates said second piece of hydromechanical equipment (20) to determine a speed setpoint.

3. Device according to claim 2, **characterised in that** said movable actuating member (31, 36) is designed to maintain a constant speed setpoint on said second piece of equipment (20) when it is within said first range of positions, and to maintain a constant pitch setpoint on said first piece of equipment (10) when it is within said second range of positions.

4. Device according to either claim 2 or claim 3, **characterised in that** said movable actuating member (31, 36) is designed to move within at least one third range of positions, referred to as a neutral range, in which it does not exert any notable action on either of the two pieces of hydromechanical equipment.

5. Device according to any of claims 1 to 4, **characterised in that** said second piece of hydromechanical equipment (20) comprises a hydraulic slide that is designed to hydraulically control the propeller pitch and is connected to balance weights designed to be driven mechanically at a speed proportional to that of the propeller, and a return spring of said balance weights, and **in that** said movable actuating member (31, 36) of said electromechanical actuator is designed to act on the stress of said return spring of the balance weights.

6. Device according to any of claims 1 to 5, **characterised in that** said first piece of hydromechanical equipment (10) comprises at least one hydraulic slide that hydraulically controls the propeller pitch and is driven mechanically by a connecting link connected to a copy of the pitch of the propeller, and **in that** said movable actuating member (31, 36) of said electromechanical actuator is designed to act on said hydraulic slide.

7. Device according to any of claims 1 to 6, **characterised in that** said movable actuating member mechanically connected to said first and second pieces of hydromechanical equipment comprises at least one cam (36) having a profile that determines an actuating law of the first and second pieces of hydromechanical equipment depending on an angular position of each cam (36).

8. Device according to any of claims 1 to 7, **characterised in that** said electromechanical actuator (30) is selected from the group comprising a stepper motor, a direct current motor or a single-track or redundant torque motor.

9. Aircraft engine of the turboprop or open rotor type, or more generally equipped with variable-pitch blades, which is equipped with a device according to any of claims 1 to 8.
